# EUROPEAN PATENT APPLICATION

(11) **EP 2 143 477 A1**
(43) Date of publication of application: **13.01.2010**
(21) Application number: 08160029.8
(22) Date of filing: 09.07.2008
(51) Int. Cl.: B01D 53/50, B01D 53/60, B01D 53/62, F23J 15/00, C05B 13/00

(54) **Abatement of oxygen-containing noxious gases by phosphor addition**

(71) Applicant: AGT Management & Engineering AG, 6340 Baar (CH); Vieslet, Jean-Paul, 4342 Awans (BE)
(72) Inventor: Vieslet, Jean-Paul, 4342 Awans (BE)
(74) Representative: Gevers, François

(57) **Abstract**

Process and device for trapping oxygen-containing noxious gases from combustion gases. The process comprises a feeding of phosphorus into an heat exchange chamber, the reaction of said phosphorus with said oxygen of said oxygen-containing noxious gases and generating a second thermal energy, and a partial transformation of the second thermal energy into mechanical work and/or electrical energy into the heat exchange chamber.

## Description

The present invention relates to a process for trapping oxygen-containing noxious gases from combustion gases comprising the steps of:
- recovering the combustion gases from a combustion gases exit, said combustion gases having a first thermal energy and
- transforming partially said first thermal energy into mechanical or electrical work into heat exchange chamber.

Such a process is known, for example, from combined cycle in which a gas turbine generator generates electricity and the waste heat is recycled to make steam to generate additional electricity via a steam turbine. This is generally done for enhancing the yield of electricity making plants. The burning of fuel, carbonated material, coal or biomass generates high temperature heat that is further converted to electricity. The combustion gases are then recovered from a combustion gases exit and present a first thermal energy. The first thermal energy is transferred to, for example, water, thereby generating steam that can be used in a steam turbine which extracts thermal energy from pressurized steam, and converts it into mechanical work.

Even if by combining both gas and steam turbines in a combined cycle, the efficiency of the cycles increases (they are powered by the same combustible source), nowadays, the combustion gases that are produced are an increasing problem. Indeed, it is well known that combustion gases contain high level of noxious gases, in particular oxygen-containing noxious gases such as carbon monoxide, carbon dioxide, nitrogen oxide, sulphur oxide and the like. Moreover, there sometimes remains unburned hydrocarbon such as methane, coal fines and the like that all contributes to the greenhouse effect.

It is known that a conventional combined cycle (fed by means of methane, being the most powerful) produces as waste about 345 Kg of CO₂ for each produced MW.

It is an object of the invention to palliate at least some of these drawbacks by providing a process in which the noxious gases emission is drastically reduced.

To this end, the invention provides a process according to the preamble of claim 1, **characterised in that** said process further comprises a step of
- feeding phosphorus into said heat exchange chamber,
- reacting said phosphorus with said oxygen of said oxygen-containing noxious gases and generating a second thermal energy, and
- transforming partially said second thermal energy into mechanical work and/or electrical energy into the said heat exchange chamber.

According to the invention, the process comprises the reaction of the oxygen from oxygen-containing noxious gases (carbon oxide, nitrogen oxide, sulphur oxide and the like) thereby, for example, precipitating most of the carbon and sulphur present in those oxygen-containing noxious gases and forming nitrogen gas. It is known that phosphorus reacts thoroughly with oxygen. For this reason, phosphorus is generally shipped under water to avoid oxygen contacts.

Today, emission of greenhouse gases causes industry to pay large amount of penalties. It is clear that the finding of a process allowing the reduction of such emission is advantageous for the industry as well as for environment. However, to be sure that industry will quickly adopt the process according to the invention, it is advantageous to provide a process in which the yield will be exponentially increased, i.e. in which the cost of the phosphorus is not just counterbalanced by the cost save with the no more to be paid penalties.

It has been surprisingly found that the reaction of the oxygen from the noxious gases is sufficiently exothermic for creating energy in such a manner that the costs of the phosphorus element is largely cost effective by generating a second thermal energy that is further recovered in a steam turbine.

Hence, the costs involved in the purchase of phosphorus is completely amortized by the generation of energy that can be easily used in other portions of a plant.

Advantageously, the process according to the invention further comprises a step of reflecting the luminescent energy to a predetermined point of said heat exchange chamber where said luminescent energy is transformed into thermal energy, thereby forming a portion of said second thermal energy.

A reaction with oxygen takes place at the surface of phosphorus, forming molecules with a short live such as HPO and P₂O₂ that both emit visible light.

Therefore, the yield of the process according to the invention is largely increased and energy is recovered from a lot of secondary reactions in the process according to the invention.

In a preferred embodiment, the combustion gases originate from the combustion of carbonated material chosen in the group consisting of fuel, coal, biomass and the like generating a thermal energy called third thermal energy.

To this end, the combustion gases that are generally sent to the atmosphere or in a burner are now recycled and the energy is drastically recovered without pollute further the environment.

In a variant embodiment of the process according to the invention, said third thermal energy being transformed into mechanical work by a gas turbine.

In another variant, said third thermal energy is used directly for heating a raw material without being transformed.

Preferably, in the process according to the invention, said phosphorus is chosen in the group of red phosphorus and white phosphorus and the like, and is preferably white phosphorus.

Other embodiments of the process according to the invention are mentioned in the annexed claims.

The invention relates also to a device for trapping oxygen-containing noxious gases from combustion gases comprising a heat exchange chamber having a first inlet for combustion gases and an outlet for steam generated by heat exchange of thermal energy with water.

The device according to the invention is **characterized in that** it further comprises a second inlet into said heat exchange chamber for feeding phosphorus.

Advantageously, in the device according to the invention, the heat exchange chamber further comprises a reflector means provided to reflect the luminescent energy to a predetermined point of said heat exchange chamber where said luminescent energy is transformed into thermal energy.

In a more preferred embodiment according to the invention, the device further comprises a water bath in which a keg is immerged, said keg further comprising an outlet connected to said second inlet. The water bath heats the phosphorus until a temperature comprised between 70 and 95°C, preferably between 80 and 90°C for transforming solid phosphorus in liquid phosphorus in an ultrafluid state.

In still a preferred embodiment of the device according to the invention, said outlet of said keg comprises a trap conduit to avoid the contact between oxygen or air and phosphorus.

Other embodiments of the device according to the invention are mentioned in the annexed claims.

The invention relates also to the use of phosphorus, preferably of white phosphorus for trapping oxygen from oxygen-containing noxious gases from combustion gases and for precipitating said noxious gases.

Other embodiments of the use according to the invention are mentioned in the annexed claims.

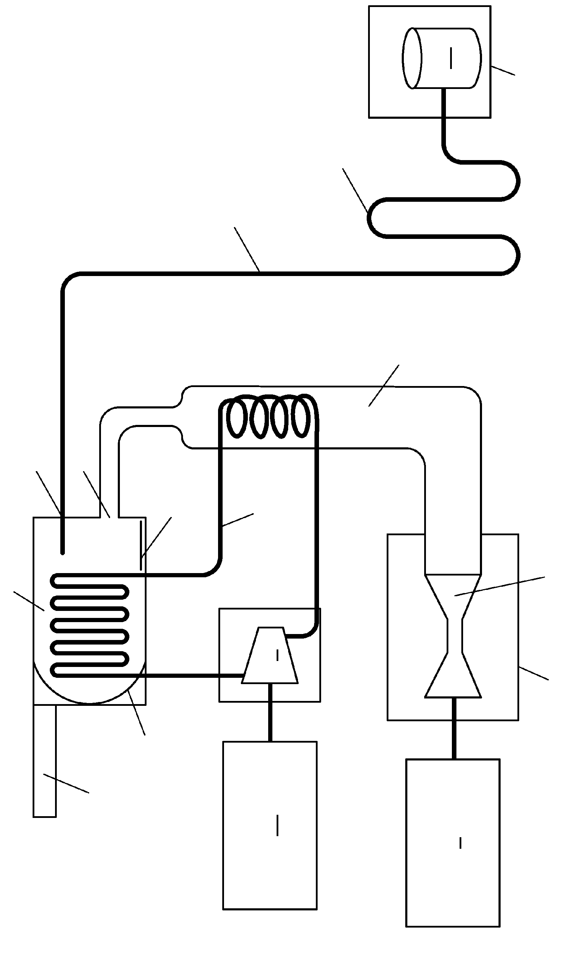

Other characteristics and advantages of the invention will appear more clearly in the light of the following description of a particular non-limiting embodiment of the invention while referring to the figure illustrating a particular embodiment according to the invention of a combined cycle.

As it can be seen in the figure, the device comprises a combustion zone 1 comprising a gas turbine 2 of a conventional type for the combustion of carbonated material such as fuel, coal or biomass. The gas turbine if further connected to a generator 3 to produce electricity in a conventional way that will not be further described here. The combustion of carbonated material produces hot combustion gases at a temperature generally comprised between 450°C and 700°C, preferably around 600°C. The hot combustion gases are directed in a stack 4 and are loaded with carbon dioxide, carbon monoxide, metal oxide, sulphur oxide, nitrogen oxide and the like. The stack is connected to a heat exchange chamber 5 according to the invention by means of the first combustion gases inlet 6. In the stack, it is provided a water coil 7 for capturing the heat from the waste combustion gases.

The water coil 7 passes through the heat exchange chamber 5 according to the invention before being further connected to a steam turbine 8 for recovering energy. The combustion gases containing the waste energy penetrates in the heat exchange chamber 5 wherein phosphorus is further fed by means of the second inlet 9 for phosphorus. The second inlet 9 abuts preferably in the central portion of the heat exchange chamber 5 in order to optimize the recovered luminescent energy that can be reflected in the reflector 15.

The second inlet 9 for phosphorus is connected to a conduit 10 free of oxygen comprising a trap conduit 11 for avoiding the contact between phosphorus, preferably white phosphorus, and air or oxygen. The keg 12 containing phosphorus is immerged in a water bath 13 for preventing the contact between air or oxygen and phosphorus. The water bath also heats the phosphorus at a temperature between 70 and 95°C, preferably between 80 and 90°C for transforming solid phosphorus in liquid phosphorus in an ultrafluid state.

The heat exchange chamber 5 according to the invention is made of refractory material for having the best thermal energy recovering.

The process according to the invention aims to trap completely or nearly completely oxygen-containing noxious gases and greenhouse gases that exit gas turbines 2 or other plant 1 using combustion of hydrocarbon material whilst optimizing the potential energy of those gases.

To this end, the invention uses a recovery heat exchange chamber 5 comprising a reactive zone in which phosphorus can react (preferably white phosphorus). In this zone, phosphorus will enter spontaneously into combustion by contact with hot recovered combustion gases. The combustion of phosphorus can be regulated by the amount of fed phosphorus and would be as to consummate the maximum of the present oxygen in carbon dioxides, carbon monoxide, sulphur oxide and nitrogen oxide of the combustion gases.

White phosphorus burns spontaneously at 34°C in the presence of air or oxygen. To allow its handling, it is quite always coated with water and kept in metallic keg 12. Phosphorus is insoluble in water. It smelt at 44,1°C and the fluidity index increase with temperature, to boil at 280°C.

White phosphorus is easily combined with oxygen to form oxides, in particular phosphorus oxides that sublimate at 250°C.

The liquid white phosphorus feeding, in the absence of oxygen, under pressure at the heart of the recovered gases, causes immediately oxidation-reduction reaction of carbon dioxides, carbon monoxide, sulphur oxide and nitrogen oxide, as well as other gaseous oxides.

The result will be a carbon phosphide, a red residue, accompanied by salts, powdered oxides and gases (nitrogen, inert gases). The residues can be evacuated from the chamber, for example by passing said exiting gases through heat exchanger to recover thermal energy and precipitates fines. The remaining residues will then be striked-off in the bottom of the chamber or on the walls by means of a striking-off means 14. Further, the residues can be valorised as fertilizers since rich in phosphorus.

The process according to the invention allows therefore to optimize the recovering of combustion gases, inter alia in a combined cycle (combined cycle gas turbine plant), but also in a post-combustion cycle of any hot gases and loaded originating from any industrial thermal cycles.

Therefore, the process according to the invention provides the oxidation-reduction of any oxygen-containing noxious gases present in recycled gases from turbines 2 or industrial thermal cycles. Further, the energy that is contained in the recycled gases is doped and increased by the addition of the energy originating from the combustion of phosphorus (from the exothermic reaction as well as from the emitted luminescent energy).

To this end, the heat exchange chamber 5 comprises reflector means 15 provided to reflect the luminescent energy to a predetermined point said heat exchange chamber 5 where said luminescent energy is transformed into thermal energy. The heat exchange chamber further comprises an outlet 16 for exiting waste gases exempt from noxious gases and comprising, for example nitrogen. The outlet 16 can be further provided with filtration units for recovering fines.

As it can be seen, the steam turbine is further connected to a generator 17 for converting thermal energy into mechanical work and into electricity for further use.

Although the preferred embodiments of the invention have been disclosed for illustrative purpose, those skilled in the art will appreciate that various modifications, additions or substitutions are possible, without departing from the scope and spirit of the invention as disclosed in the accompanying claims.

For example, the combustion gases can be on line analysed for dosing the presence of oxygen in oxygen-containing noxious gases and in combustion gases (that still contains traces of air and/or oxygen) for optimizing the phosphorus feeding rate.

In the case of red phosphorus or black phosphorus is used, i.e. powdered phosphorus, instead of the trap conduit, a device for injecting under inert atmosphere is provided in which the powdered phosphorus is propulsed by an inert gas.

## Claims

1. Process for trapping oxygen-containing noxious gases from combustion gases comprising the steps of:
- recovering the combustion gases from a combustion gases exit, said combustion gases having a first thermal energy
- transforming partially said first thermal energy into mechanical or electrical work into heat exchange chamber,
**characterized in that** said process further comprises a step of
- feeding phosphorus into said heat exchange chamber,
- reacting said phosphorus with said oxygen of said oxygen-containing noxious gases and generating a second thermal energy, and
- transforming partially said second thermal energy into mechanical work and/or electrical energy into the said heat exchange chamber.

2. Process according to claim 1, further comprising a step of reflecting the luminescent energy to a predetermined point of said heat exchange chamber where said luminescent energy is transformed into thermal energy, thereby forming a portion of said second thermal energy.

3. Process according to claim 1 or 2, wherein the combustion gases originates from the combustion of carbonated material chosen in the group consisting of fuel, coal, biomass and the like generating a thermal energy called third thermal energy.

4. Process according to claim 3, wherein said third thermal energy being transformed into mechanical work by a gas turbine.

5. Process according to claim 3, wherein said third thermal energy is used directly for heating a raw material without being transformed.

6. Process according to anyone of the claims 1 to 5, in which said phosphorus is chosen in the group of red phosphorus and white phosphorus and the like and is preferably white phosphorus.

7. Device for trapping oxygen-containing noxious gases from combustion gases comprising a heat exchange chamber (5) having a first inlet (6) for combustion gases and an outlet for steam generated by heat exchange of thermal energy with water, **characterized in that** said device further comprises a second inlet (9) into said heat exchange chamber (5) for feeding phosphorus.

8. Device according to claim 7, wherein said heat exchange chamber (5) further comprises a reflector means (15) provided to reflect the luminescent energy to a predetermined point of said heat exchange chamber (5) where said luminescent energy is transformed into thermal energy.

9. Device according to claim 7 or claim 8, further comprising a water bath (13) in which a keg (12) is immerged, said keg (12) further comprising an outlet connected to said second inlet (9).

10. Device according to claim 9, wherein said outlet of said keg comprised a trap conduit (11).

11. Use of phosphorus, preferably of white phosphorus for trapping oxygen from oxygen-containing noxious gases from combustion gases and for precipitating said noxious gases.
